# EUROPÄISCHE PATENTSCHRIFT

(11) **EP 1 211 470 B1**
(45) Veröffentlichungstag und Bekanntmachung des Hinweises auf die Patenterteilung: **16.01.2008**
(21) Anmeldenummer: 01126957.8
(22) Anmeldetag: 13.11.2001
(51) Int. Cl.: F25D 29/00, G07F 9/02, G06Q 10/00

(54) **Kältegerät mit einer Verwaltungseinheit**
Refrigeration apparatus with a management unit
Appareil frigorifique avec une unité de gestion

(30) Priorität: 04.12.2000 DE 10060154
(43) Veröffentlichungstag der Anmeldung: 05.06.2002
(73) Patentinhaber: BSH Bosch und Siemens Hausgeräte GmbH, 81739 München (DE)
(72) Erfinder: Wenning, Udo, Dr., 89537 Giengen/Brenz (DE); Neumann, Michael, Dr., 89537 Giengen/Brenz (DE); Eberhardt, Hans-Frieder, 89537 Giengen-Burgberg (DE)

(56) Entgegenhaltungen:
- EP-A- 1 011 061
- DE-U- 29 912 346
- JP-A- 2000 296 904
- US-A- 6 125 352
- US-B1- 6 204 763
- PATENT ABSTRACTS OF JAPAN vol. 1999, no. 12, 29. Oktober 1999 (1999-10-29) -& JP 11 201623 A (MEI SYSTEMS:KK), 30. Juli 1999 (1999-07-30) -& DATABASE WPI Derwent Publications Ltd., London, GB; AN 1999-482237 XP002267568
- PATENT ABSTRACTS OF JAPAN & JP 2000 296904 A (FUJITSU LTD), 24. Oktober 2000 (2000-10-24)

## Beschreibung

Die vorliegende Erfindung betrifft ein Kältegerät gemäß dem Oberbegriff des Anspruches. Ein derartiges Kältegerät ist aus dem Dokument JP 2000-296 904 bekannt.

Ferner aus EP-0 974 798 A2 ein Kältegerät mit Verwaltungseinheit bekannt die durch Kommunikation mit femabfragbaren Datenträgern, die an einem in dem Kältegerät gelagerten Artikel angebracht sind, oder mit Hilfe eines Barcode-Lesegeräts in der Lage ist, eine Liste von Artikeln zu führen, die sich in dem Kältegerät befinden. Diese Liste wird per Funk an ein Bediengerät übertragen, das ein Benutzer beim Einkaufen mitnehmen und dort abfragen kann, um sich über den Inhalt des Kältegeräts zu vergewissern.

Das bekannte Kältegerät kann ferner mit einem PC verbunden sein, der in der gleichen Weise wie das bereits erwähnte Bediengerät zum Anzeigen und Verwalten der in dem Kältegerät gelagerten Vorräte dient, und der überdies in der Lage sein soll, eine automatische Nachbestellung von Lebensmitteln per Telefax oder per E-Mail durchzuführen.

Wie eine solche Nachbestellung von Lebensmitteln vonstatten gehen soll und insbesondere, wie der PC eine Nachbestellung zusammenstellen soll, bleibt jedoch offen. Ein weiteres Problem dieses bekannten Kältegeräts ist, dass ein Benutzer gezwungen ist das Bediengerät mitzuführen, wenn er bei einem Einkauf auf die Liste der in dem Kältegerät befindlichen Artikel zurückgreifen will. In einer Familie, in der an sich mehrere Personen in der Lage wären, Einkäufe zu erledigen, kann deshalb nur eine die Vorteile des bekannten Kältegeräts nutzen.

Aufgabe der vorliegenden Erfindung ist, ein Kältegerät gemäß dem Oberbegriff des Anspruches 1 mit einfach konstruktiren Maßnahmen zu verbessern.

Dies wird einerseit dadurch erreicht, dass die Verwaltungseinheit eingerichtet ist, zu einem als fehlend festgestellten Artikel Preise von einer Mehrzahl dieser entfernten Endgeräte abzufragen. Erst dadurch ist die Verwaltungseinheit in der Lage, fehlende Artikel bei demjenigen Händler nachzubestellen, der sie am preiswertesten anbietet und so die wirtschaftlichen Interessen des Benutzers zu wahren. Die Abfrage der Preise von dem entfernten Endgerät kann jeweils spezifisch nach der Erstellung einer Bedarfsliste und gezielt für die in dieser Liste enthaltenen Artikel durchgeführt werden; denkbar ist aber auch, in geeigneten Zeitabständen Preise einer umfangreicheren Liste von Artikeln, hier als Interesseliste bezeichnet, bei den mehreren entfernten Endgeräten abzufragen. Eine erste Verarbeitung der Bedarfs- oder Interesseliste, zu der die entfernten Endgeräte in der Lage sein müssen, ist also die Übertragung von Preisinformationen zu jedem in der Liste aufgeführten Artikel an die Verwaltungseinheit.

Anderseits zeichnet sich das erfindungsgemäß Kältegerät dadurch aus, daß die Verwaltungseinheit eingerichtet ist, einen in dem Kältegerät erfassten Ist-Vorratsbestand mit einem Ziel-Vorratsbestand zu vergleichen, der in Form einer Liste in der Verwaltungseinheit gespeichert sein kann, und in dem Fall, dass der Ist-Vorratsbestand hinter dem Soll-Vorratsbestand zurückbleibt, eine Übertragungsverbindung über die Schnittstelle und das Datenübertragungsnetzwerk zu einem entfernten Endgerät, d.h. insbesondere zu einem Computer eines Lebensmittelhändlers, aufzubauen und eine als Bedarfsliste bezeichnete Liste von Bezeichnungen von als im Ist-Vorratsbestand als fehlend festgestellten Artikeln an das entfernte Endgerät zu übertragen.

Das heißt durch Vergleich mit dem Soll-Vorratsbestand können im Ist-Vorratsbestand fehlende Artikel erkannt und gegebenenfalls automatisch nachbestellt werden.

Um die Akzeptanz derartiger Kältegeräte zu verbessern, ist es wünschenswert, dass Nachbestellungen nicht notwendigerweise immer bei einem gleichen Händler vorgenommen werden müssen. Zu diesem Zweck verfügt die Verwaltungseinheit vorzugsweise über ein Verzeichnis von Adressen entfernter Endgeräte, die in der Lage sind, eine an sie übertragene Bedarfsliste zu verarbeiten. Dabei kann die Verarbeitung der Bedarfsliste unterschiedliche Operationen in dem entfernten Endgerät umfassen, worauf im folgenden noch genauer eingegangen wird.

Zu jedem abgefragten Artikel wird wenigstens ein Preis in Verbindung mit der Endgeräteadresse, von der der Preis angegeben worden ist, an der Verwaltungseinheit gespeichert.

Wenn zu jedem Artikel nur ein Preis abgespeichert wird, wählt die Verwaltungseinheit hierfür zweckmäßigerweise den jeweils niedrigsten aus; es kann aber auch zweckmäßig sein, zu einem Artikel eine Mehrzahl von Preisen zu speichern, die von verschiedenen entfernten Endgeräten angegeben worden sind.

Anhand der abgefragten oder gespeicherten Preisinformation teilt die Verwaltungseinheit die Menge der als fehlend festgestellten Artikel in eine oder mehrere Bedarfslisten zur Übertragung an verschiedene entfernte Endgeräte auf, wobei jeder Artikel der Bedarfsliste für dasjenige Endgerät zugeschlagen wird, dem der niedrigste Preis dieses Artikels zugeordnet ist. Die zweite Verarbeitung, die das entfernte Endgerät leisten muss, ist eine Erkennung einer übertragenen Bedarfsliste als Bestellung und deren Bearbeitung.

Einer bevorzugten Weiterentwicklung zufolge ist die Verwaltungseinheit darüber hinaus eingerichtet, nicht nur die von einem entfernten Endgerät angegebenen Preise, sondern darüber hinaus Lieferbedingungen wie etwa Mindestbestellmengen und Zustellungskosten abzufragen und diese Parameter bei der Erstellung einer Bedarfsliste mit dem Ziel zu berücksichtigen, dass die Gesamtkaufsumme der als fehlend festgestellten Artikel minimiert wird. Dies kann dazu führen, dass eine Bedarfsliste, die alle als fehlend festgestellten Artikel enthält, an ein Endgerät übertragen wird, oder dass die Menge auf eine Mehrzahl von Bedarfslisten verteilt wird, die an verschiedene entfernte Endgeräte übertragen werden, wobei das Endgerät, dessen Bedarfsliste einen gegebenen Artikel enthält, nicht notwendigerweise den niedrigsten Preis für diesen Artikel gemeldet haben muss..

Ein weiteres wünschenswertes Merkmal des erfindungsgemäßen Kältegeräts ist die Fähigkeit der Verwaltungseinheit, Verfalls- und/oder Einlagerungsdaten von Artikeln des Vorratsbestandes zu erfassen und Bezeichnungen von im Ist-Vorratsbestand vorhandenen Artikeln in Abhängigkeit vom Verhältnis des Verfalls- und/oder des Einlagerungsdatums zum aktuellen Datum zu der Bedarfsliste hinzuzufügen. Die Definition dieser Abhängigkeit kann dem Benutzer des Kältegeräts freigestellt werden. So kann dieser z.B. die Möglichkeit haben, allgemein, für Gruppen von Artikeln oder für einzelne Artikel zu spezifizieren, dass der Artikel noch vor Ablauf des Verfallsdatum nachbestellt werden soll, um zu gewährleisten, dass er stets in hinreichender Frische verfügbar ist. Eine solche Spezifizierung ist z.B. sinnvoll, wenn das erfindungsgemäße Kältegerät in einem kommerziellen Rahmen, z.B. im Lebensmittelhandel oder in einer Apotheke zur Kühlung von Medikamenten eingesetzt wird, wobei in beiden Fällen Artikel nach Ablauf des Verfallsdatums nicht mehr verwendet oder verkauft werden sollen bzw. dürfen. Bei einer Nutzung des erfindungsgemäßen Kältegeräts im privaten Rahmen hingegen kann vorgesehen werden, dass erst mit Ablauf des Verfallsdatums oder auch erst einige Tage später ein noch vorhandener Artikel zur Bedarfsliste hinzugefügt wird. Dies kann zweckmäßig sein, weil die meisten Lebensmittel auch einige Tage nach Ablauf des Verfallsdatums bzw. des Mindesthaltbarkeitsdatums noch ohne weiteres genießbar sind. Da nicht alle Lebensmittel mit einem vorgegebenen Verfallsdatum verkauft werden, kann als ein Ersatzkriterium, insbesondere für unverpackte Lebensmittel wie frisches Gemüse, das Datum der Einlagerung dieser Lebensmittel in das Kältegerät herangezogen werden.

Einer bevorzugten Ausgestaltung zufolge ist die Verwaltungseinheit des Kältegeräts ferner in der Lage, den Ist-Vorratsbestand auf Anforderung über das Datenübertragungsnetzwerk an ein entferntes Endgerät zu übertragen. Dies ermöglicht es einer Mehrzahl von Benutzern des Kältegeräts, unabhängig von einander die Angaben über den Vorratsbestand abzufragen und in Abhängigkeit von diesen Angaben Einkäufe zu erledigen. Als entfernte Endgeräte kommen hier z.B. ein Arbeitsplatzrechner an der Arbeitsstätte des Benutzers oder ein WAP-Handy in Frage, mit denen über das Internet der Vorratsbestand abfragbar ist.

Komplementär zu dieser Abfragemöglichkeit ist es ferner zweckmäßig, dass die Verwaltungseinheit eingerichtet ist, über das entfernte Endgerät bezeichnete Artikel zur Menge der als fehlend festgestellten Artikel hinzuzufügen und/oder daraus zu entfernen. Dies erlaubt es einem abfragenden Benutzer, Artikel, die er einzukaufen beabsichtigt, aus dieser Menge zu entfernen und so zu verhindern, dass ein zweiter Benutzer die gleichen Artikel kauft oder diese von dem Kältegerät automatisch bestellt werden. Durch Hinzufügen von Artikeln zu der Menge kann erreicht werden, dass über den anhand des Inhalts des Kältegeräts festgestellten Bedarf hinaus weitere Artikel entweder durch automatische Bestellung oder durch einen zweiten Benutzer, der ebenfalls die Menge der fehlenden Artikel abfragt, eingekauft werden.

Ein weiteres nützliches Merkmal des Kältegeräts ist die Möglichkeit, an der Verwaltungseinheit einen Zeitpunkt zu definieren, zu dem diese selbsttätig eine Bestellung von als fehlend festgestellten Artikeln überträgt. So kann ein Benutzer z.B. vorgeben, dass eine Nachbestellung von Lebensmitteln zu einer spätest möglichen Tageszeit aufgegeben wird, an der noch gewährleistet ist, dass die nachbestellten Lebensmittel am gleichen Abend eintreffen. Dies gibt einem Benutzer die Möglichkeit, nach Arbeitsschluss oder in einer Mittagspause benötigte Lebensmittel selbst einzukaufen, diejenigen Lebensmittel aber, die er nicht wirtschaftlich selbst besorgen kann, und die er deshalb in der Menge der als fehlend festgestellten Artikel nicht entfernen lassen wird, automatisch liefern zu lassen.

Die Möglichkeit, dass der Benutzer die Menge der als fehlend festgestellten Artikel nach seinem Gutdünken modifizieren kann, führt beiläufig auch dazu, dass das Kältegerät zum automatischen Einkauf von Gegenständen eingesetzt werden kann, die keine Lagerung in dem Kältegerät erfordern, wie etwa von Lebensmittelkonserven oder sogenannten Non-Food-Artikeln.

Einer weiteren bevorzugten Ausgestaltung zufolge ist an der Verwaltungseinheit eine sogenannte Interesseliste von Artikelbezeichnungen jeweils in Verbindung mit einem Preis gespeichert, und die Verwaltungseinheit ist eingerichtet, aktuelle Preise zu den Artikeln der Interesseliste von den entfernten Endgeräten anzufordern, und, wenn der von einem Endgerät übertragene Preis eines Artikels unter dem der Interesseliste liegt, den Artikel in die Bedarfsliste für dieses Endgerät aufzunehmen. Dies ermöglicht es dem Kältegerät, bei der Aufgabe von Bestellungen aktuelle Sonderangebote auszunutzen. Als Sicherheitsvorkehrung kann vorgesehen werden, bzw. kann der Benutzer einstellen, dass die Verwaltungseinheit vor der Aufnahme eines solchen Artikels in die Bedarfsliste eine Genehmigung des Benutzers anfordert. Dies kann durch Anzeigen der Genehmigungsanforderung direkt an dem Kältegerät bzw. seiner Verwaltungseinheit geschehen; denkbar ist aber auch, dass die Verwaltungseinheiteine solche Anforderung als Nachricht über das Datenübertragungsnetzwerk an ein entferntes Endgerät sendet, auf das der Benutzer Zugang hat.

Für die Erfassung der in dem Kältegerät gelagerten Artikel kann zweckmäßigerweise ein Lesegerät mit der Verwaltungseinheit verbunden sein, dass zum Erfassen einer an einem einzulagernden Artikel angebrachten Kennzeichnung geeignet ist. Ein solches Lesegerät kann einmal beim Einlagern eines solchen Gegenstandes eingesetzt werden, um die Kennzeichnung des Gegenstandes zum Ist-Vorratsbestand hinzuzufügen; sie kann ein zweites Mal dazu eingesetzt werden, die Bezeichnung aus dem Ist-Vorratsbestand zu entfernen, wenn der Artikel entnommen wird. Weitere vorteilhafte Hilfsmittel zum Erfassen des Ist-Vorratsbestandes sind eine Spracherkennungseinrichtung, mit der eine vom Benutzer gesprochene Bezeichnung eines einzulagernden oder eines entnommenen Artikels erfassbar ist, sowie eine Wägeeinrichtung, mit der die Mengen von bestimmten Artikeln quantitativ erfasst werden können. Mit Hilfe einer solchen Wägeeinrichtung ist die Verwaltungseinheit nicht nur in der Lage, zu verfolgen, dass sich ein bestimmter Artikel im Kältegerät befindet, sondern auch, in welcher Menge er vorhanden ist, und ob die Menge eventuell soweit reduziert ist, dass der entsprechende Artikel nachbestellt werden sollte.

Weitere Merkmale und Vorteile der vorliegenden Erfindung ergeben sich aus der nachfolgenden Beschreibung von Ausführungsbeispielen mit Bezug auf die beigefügte Figur.

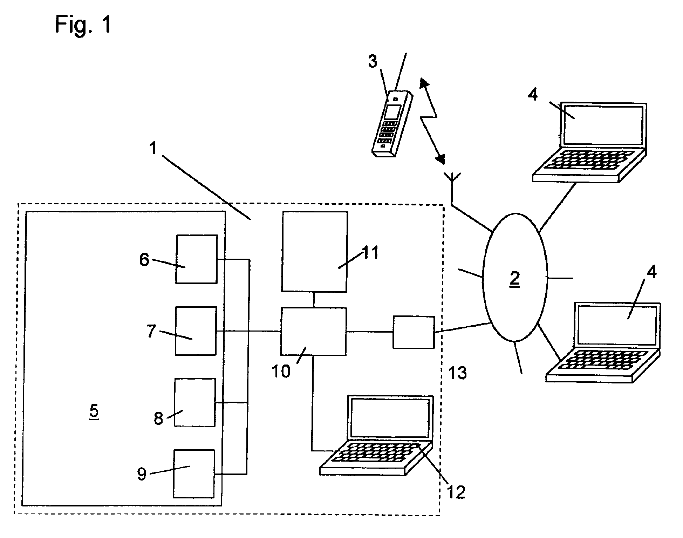

Fig. 1 zeigt ein Blockdiagramm eines erfindungsgemäßen Kältegeräts 1, das eingerichtet ist, um über ein Datenübertragungsnetzwerk 2, insbesondere das Internet, mit einer Mehrzahl entfernter Endgeräte 3, 4 zu kommunizieren. Wesentliche Bestandteile des Kältegeräts 1 ist eine Lagerkammer 5 für zu kühlende Artikel, insbesondere Lebensmittel oder Medikamente, und eine Verwaltungseinheit 10. An der Lagerkammer 5 sind diverse Datenerfassungshilfsmittel 6, 7, 8, 9 angebracht. Nicht alle diese Hilfsmittel müssen gleichzeitig an einem erfindungsgemäßen Kältegerät vorhanden sein. Ein erstes dieser Hilfsmittel ist ein optisches Zeichenerfassungsgerät, insbesondere ein Barcode-Leser 6, an dem ein Benutzer einen Gegenstand, der in der Lagerkammer 5 eingelagert werden oder aus ihr entnommen werden soll, vorbeiführt, um einen darauf aufgedruckten Barcode zu erfassen. Ein weiteres Hilfsmittel ist eine Spracherkennungseinrichtung 7, der der Benutzer eine Bezeichnung eines einzulagernden oder zu entnehmenden Gegenstandes, gegebenenfalls mit einer Angabe darüber, ob der Gegenstand entnommen oder eingelagert werden soll, vorsprechen kann. Als weiteres Hilfsmittel kann eine Sender-Empfänger-Einheit 8 vorgesehen sein, die dazu dient, Abfrage-Funksignale an Transponder zu senden, die an in der Lagerkammer 5 gelagerten Artikeln befestigt sind, um anhand von von diesen Transpondern gelieferten Antwortsignalen zu erkennen, ob sich ein mit einem bestimmten Transponder gekennzeichneter Artikel in der Lagerkammer 5 befindet oder nicht. Als weiteres, komplementäres Hilfsmittel kann eine Wägeeinrichtung 9 vorgesehen sein, mit deren Hilfe das Gewicht eines Artikels erfasst werden kann.

Alle diese Hilfsmittel sind mit der Verwaltungseinheit 10 verbunden, an die sie erfasste Daten übertragen. An die Verwaltungseinheit 10 sind ferner ein Speicher 11, der eine Mehrzahl von noch zu erläuternden Tabellen oder Listen enthält, eine Ein-/Ausgabe-Einheit 12 für den Dialog mit einem Benutzer und ein Modem 13 für die Kommunikation mit dem Internet 2 angeschlossen.

Zu den in dem Speicher 11 gespeicherten Listen gehört eine Liste des Ist-Vorratsbestandes in der Lagerkammer 5 sowie eine Liste des Soll-Vorratsbestandes. Die Verwaltungseinheit 10 ändert die Liste des Ist-Vorratsbestandes jedesmal, wenn von einer der Hilfseinrichtungen 6 bis 9 Daten über neu eingelagerte oder entnommene Artikel empfangen werden. Dabei kann eine von dem Barcode-Leser 6 oder der Spracherkennungseinrichtung 7 erfasste Bezeichnung eines Artikels unmittelbar in die Liste des Ist-Vorratsbestandes übernommen werden.

Falls das Kältegerät mit dem Sender-Empfänger 8 ausgestattet ist, kann dieser jedesmal, wenn der Verwaltungseinheit 10 über den Barcode-Leser 6 oder die Spracherkennungseinrichtung 7 die Einlagerung eines neuen Artikels angezeigt wird, die in ihrer Reichweite, d.h. insbesondere in der Lagerkammer 5, befindlichen Transponder abfragen, um festzustellen, ob darunter ein neuer ist, und einen von dem Transponder gesendeten, für ihn charakteristischen Code als zu dem neu eingelagerten Artikel gehörig in einem dem Artikel zugeordneten Eintrag der Ist-Vorratsbestandsliste abspeichern. Dadurch ist die Verwaltungseinheit 10 in der Lage, durch Aussenden eines Abfragesignals und Empfangen eines Antwortsignals zu überprüfen, ob der mit dem Transponder gekennzeichnete Artikel in der Lagerkammer 5 vorhanden ist, ohne dass dieser bei der Entnahme aus der Lagerkammer 5 ein zweites Mal erfasst werden muss.

Wenn kein Transponder verwendet wird, kann ein Benutzer einen zu entnehmenden Gegenstand ein zweites Mal an dem Barcode-Leser 6 vorbeiführen oder die Bezeichnung des Gegenstandes der Spracherkennungseinrichtung 7 vorsprechen, um so die Verwaltungseinheit 10 zu veranlassen, die Bezeichnung aus der Ist-Vorratsbestand zu streichen.

Die Wägeeinrichtung 9 ist nutzbar, um zu jedem Artikel in der Ist-Vorratsliste nicht nur das Vorhandensein zu erfassen, sondern darüber hinaus die Menge des Artikels.

Eine zweite in dem Speicher 11 geführte Liste ist eine Liste des Soll-Vorratsbestandes. Diese Liste ist durch den Benutzer veränderbar; für diesen Zweck ist die Ein-/Ausgabe-Einheit 12 vorgesehen. Die Ein-/Ausgabe-Einheit 12 kann, genauso wie die Verwaltungseinheit 10, mit der Lagerkammer 5 zu einer Baueinheit integriert sein; sie kann jedoch auch die Gestalt eines herkömmlichen PC's haben. An einem Bildschirm der Ein/Ausgabe-Einheit sind die diversen im Speicher 11 geführten Listen anzeigbar, und ein Benutzer kann durch Tasteneingabe Einträge zu einer Liste hinzufügen oder daraus entfernen. Zum Hinzufügen und Entfernen von Einträgen ist es auch möglich, die Spracherkennungseinrichtung 7 zu nutzen; in einem solchen Falle kann eine Tastatur an der Ein/Ausgabe-Einrichtung 12 entfallen.

Durch elementweisen Vergleich der Listen des Ist-Vorratsbestandes und des Soll-Vorratsbestandes ermittelt die Verwaltungseinheit 10 eine Menge von fehlenden Artikeln, die nachbeschafft werden müssen.

Über das Modem 13 und das Internet 2 ist die Verwaltungseinheit 10 in der Lage, mit unterschiedlichen Typen von Endgeräten 3, 4 zu kommunizieren. Ein erster Typ von Endgerät ist ein Benutzer-Endgerät, in der Fig. dargestellt als ein WAP- oder SMS-fähiges Handy. Genauso könnte es sich bei dem Benutzer-Endgerät auch um einen PC handeln, dies ist für die Arbeitsweise der Verwaltungseinheit 10 ohne Belang. Die Verwaltungseinheit 10 ist eingerichtet, um auf eine von dem Benutzer-Endgerät 3 empfangene Anfrage hin eine von dem Benutzer-Endgerät 3 spezifizierte Liste unter den im Speicher 11 geführten Listen oder die Menge der fehlenden Artikel an das Endgerät 3 zu übertragen. Ein Benutzer kann sich so jederzeit und von jedem Ort aus eine Übersicht über den Inhalt des Kältegeräts bzw. die einzukaufenden Artikel verschaffen. Anschließend kann der Benutzer durch eine Eingabe am Benutzer-Endgerät 3 und Übertragung der entsprechenden Daten an die Verwaltungseinheit 10 den Inhalt der Listen verändern. D.h., er kann Gegenstände, die er eingekauft hat oder einkaufen will, aus der Menge der fehlenden Artikel streichen oder direkt in die Liste des Ist-Vorratsbestandes eintragen, so dass diese Artikel einem anderen Benutzer, der in gleicher Weise zu einem späteren Zeitpunkt die Listen abfragt, als vorhanden gemeldet werden.

Ein weiterer Typ von entfernten Endgeräten, mit dem die Verwaltungseinheit 10 über das Internet 2 kommuniziert, soll hier als Händler-Endgerät 4 bezeichnet werden. Der Speicher 11 enthält eine dritte Liste von Adressen, mit denen die Händler-Endgeräte 4 über das Internet 2 kontaktierbar sind. Zu jeder dieser Adressen kann ferner eine Menge von Artikeln, die im Sortiment des betreffenden Händlers geführt werden, oder ein allgemeiner Schlüssel über die Arten von Artikeln im Sortiment des Händlers gespeichert sein.

Wenn zu einer von einem Benutzer vorgegebenen Tageszeit die Menge der fehlenden Artikel nicht leer ist, so baut die Verwaltungseinheit 10 eine Datenverbindung zu einem Händler-Endgerät 4 auf und überträgt an dieses Endgerät 4 eine Bedarfsliste, die im einfachsten Fall Bezeichnungen aller Artikel aus der Menge der als fehlend festgestellten Artikel enthält.

Bei einer einfachen Ausgestaltung der Erfindung wird diese Bedarfsliste an das Händler-Endgerät 4 in Form einer Bestellung übertragen, so dass die bestellten Artikel beim Händler zusammengestellt und dem Benutzer an eine angegebene Lieferadresse geliefert werden können.

Bei einer fortgeschritteneren Ausgestaltung überträgt die Verwaltungseinheit 10 die Bedarfsliste zunächst nicht als Bestellung, sondern als eine Preisanfrage für die darin aufgeführten Artikel und speichert von dem Händler-Endgerät 4 in Antwort auf die Anfrage zurückgelieferte Preisinformation in einer ebenfalls im Speicher 11 enthaltenen Artikel-Preisliste in Verbindung mit dem Artikel und der Adresse des Händler-Endgerätes 4, das die Preisinformation geliefert hat. Dieser Vorgang wird für eine Mehrzahl von Händler-Endgeräten wiederholt. Danach verfügt die Verwaltungseinheitin der Artikel-Preisliste über Preisinformationen mehrerer Händler über die fehlenden Artikel und kann anhand dieser Preisinformation Bedarfslisten zusammenstellen, die anschließend an die Händler-Endgeräte 4 als Bestellung übertragen werden. Diese Bedarfslisten werden zweckmäßigerweise so zusammengestellt, dass sich für den Benutzer ein möglichst niedriger Gesamtkaufpreis für die fehlenden Artikel, gegebenenfalls unter Berücksichtigung von Lieferbedingungen wie etwa Frachtkosten und Mindestabnahmemengen, der einzelnen Händler ergibt.

Einer bevorzugten Ausgestaltung zufolge wird in dem Speicher 11 eine weitere Liste, die Rechnungen von Artikeln und Preisen enthält, geführt, die hier als Interesseliste bezeichnet wird. Diese Liste kann vom Benutzer gelegentlich nachgefragte Artikel enthalten, die aber nicht zum ständigen Bedarf gehören und deshalb in der Soll-Vorratsliste nicht enthalten sind. Die Artikelbezeichnungen der Interesseliste werden von der Verwaltungseinheit 10 mit einer vom Benutzer einstellbaren Häufigkeit und zu einem wählbaren Termin, z.B. einmal pro Woche an demjenigen Wochentag, an dem ein Händler überlicherweise neue Sonderangebote ankündigt, an dessen Endgerät 4 abgesendet, um festzustellen, ob Artikel der Interesseliste unter den Sonderangeboten sind. Durch Vergleich des vom Händler-Endgerät 4 zurückgemeldeten Preises mit dem in der Interesseliste verzeichneten kann die Verwaltungseinheit 10 die Preiswürdigkeit des Sonderangebots einschätzen und gegebenenfalls den angebotenen Artikel bestellen.

Um zu verhindern, dass ein Benutzer infolge einer umfangreichen Interesseliste oder einer zufälligen Häufung von Sonderangeboten für die Artikel seiner Interesseliste die Kontrolle über seine Ausgaben verliert, kann als Sicherungsfunktion vorgesehen werden, dass die Verwaltungseinheit 10 vor dem Bestellen eines Sonderangebots eine Genehmigung des Benutzers anfordert. Eine diesbezügliche Anfrage kann auf dem Bildschirm der Ein-/Ausgabe-Einheit 12 angezeigt werden; falls der Benutzer nicht zu Hause ist, kann auch die Möglichkeit vorgesehen werden, dass die Verwaltungseinheit 10 die Anfrage über das Datenübertragungsnetzwerk 2 an das Benutzer-Endgerät 3 richtet und eine Genehmigung von dort abwartet. Eine weitere Sicherungsmöglichkeit ist, dass der Benutzer an der Verwaltungseinheit 10 einen Kostenrahmen vorgibt, der bei der Bestellung von Sonderangeboten nicht überschritten werden darf.

Die Verwaltungseinheit 10 kann nicht nur zur Überwachung des Inhalts des Kältegeräts eingesetzt werden; vielmehr kann sie mit diversen weiteren Sensoren und Stellelementen des Kältegeräts verbunden sein, um die Funktion des Kältegerätes zu überwachen und zu steuern. Sensoren können insbesondere zur Erfassung der Temperatur in der Lagerkammer 5, der darin herrschenden Luftfeuchte und Luftströmungsverhältnisse sowie des Zustands, offen oder geschlossen, der Tür der Lagerkammer 5 vorgesehen sein. Stellelemente können zum Ein-Ausschalten des Kältegeräts, insbesondere von dessen Kältemittelkreislauf, zum Einstellen einer Soll-Temperatur, einer Soll-Luftfeuchte, etc. in der Lagerkammer 5 vorgesehen sein. Die von den Sensoren erfassten Daten können von der Verwaltungseinheitauf Anforderung an ein entferntes Benutzer-Endgerät 3 übertragen werden, und die Stellelemente sind durch die Verwaltungseinheitin Abhängigkeit von von dem Benutzer-Endgerät 3 empfangenen Daten einstellbar.

Das Kältegerät 1 ist somit in allen seinen Betriebsparametern über das Benutzer-Endgerät 3 fernsteuerbar. Ein Benutzer kann daher von einem beliebigen Ort aus sich des ordnungsgemäßen Funktionierens des Geräts vergewissern und seine Arbeitsweise an aktuelle Bedürfnisse anpassen.

Die Kommunikation zwischen den Hilfseinrichtungen 6 bis 9, den Sensoren und Stellelementen an der Lagerkammer 5 und der Verwaltungseinheit 10 sowie zwischen der Verwaltungseinheit 10 und der Ein-/Ausgabe-Einheit 12 kann über beliebige geeignete Medien erfolgen, vorzugsweise über Funk, Infrarot, Powerline, Twisted-Pair, Glasfaserkabel oder Koaxialkabel. Die Verwaltungseinheit 10 kann mit der Lagerkammer 5 zu einer Baueinheit verbunden sein, sie kann jedoch auch mit allen ihren Funktionen oder einem Teil von diesen durch einen externen Computer implementiert sein, der dann auch die Rolle der Ein-/Ausgabe-Einheit 12 übernehmen kann.

Eine zusätzliche Erweiterung der Funktionen des Kältegeräts ergibt sich, wenn in den Speicher 11 zusätzlich zu den oben genannten Listen noch eine Rezept-Datenbank aufgenommen wird, anhand derer die Verwaltungseinheit 10 in der Lage ist, Rezepte auszuwählen und einem Benutzer vorzuschlagen, mit denen sich die in dem Kältegerät gelagerten Vorräte sinnvoll verwerten lassen oder die mit möglichst wenig Zukäufen zusätzlicher Lebensmittel realisierbar sind. Deren Zugriff auf diese Datenbank erfolgt zweckmäβigerweise in Abhängigkeit von den gespeicherten Verfallsdaten oder Einlagerungsterminen der in dem Kältegerät 1 gelagerten Artikel, dahingehend, dass einem Benutzer bevorzugt Rezepte solcher Artikel vorgeschlagen werden, die sich bereits längere Zeit in dem Kältegerät befinden oder deren Verfallsdatum näher rückt.

## Patentansprüche

1. Kältegerät (1) mit einer Verwaltungseinheit (10) zum Überwachen des Vorratsbestandes im Kältegerät (1), die mit einer Schnittstelle (13) zu einem Datenübertragungsnetzwerk (2) ausgerüstet ist, wobei die Verwaltungseinheit (10) eingerichtet ist, einen in dem Kältegerät (1) erfassten Ist-Vorratsbestand mit einem Soll-Vorratsbestand zu vergleichen und in dem Fall, dass der Ist-Vorratsbestand hinter dem Soll-Vorratsbestand zurückbleibt, eine Übertragungsverbindung über die Schnittstelle (13) zu einem entfernten Endgerät (4) aufzubauen und eine als Bedarfsliste bezeichnete Liste von Bezeichnungen von als im Ist-Vorratsbestand als fehlend festgestellten Artikeln an das entfernte Endgerät (4) zu übertragen, **dadurch gekennzeichnet, dass** die Verwaltungseinheit (10) eingerichtet ist, zu einem als fehlend festgestellten Artikel Preise von einer Mehrzahl entfernter Endgeräte (4) abzufragen.

2. Kältegerät nach Anspruch 1, **dadurch gekennzeichnet, dass** die Verwaltungseinheit (10) über ein Verzeichnis von Adressen entfernter Endgeräte (4) verfügt, die in der Lage sind, die Bedarfsliste zu verarbeiten.

3. Kältegerät nach einem der vorhergehenden Ansprüche, **dadurch gekennzeichnet, dass** die Verwaltungseinheit (10) eingerichtet ist, zu einem Artikel wenigstens einen Preis verknüpft mit einer zugehörigen Endgeräteadresse zu speichern.

4. Kältegerät nach Anspruch 1 oder 3, **dadurch gekennzeichnet, dass** die Verwaltungseinheit (10) eingerichtet ist, eine Bestellung eines als fehlend festgestellten Artikels an dasjenige entfernte Endgerät (4) zu übertragen, dem der niedrigste Preis des Artikels zugeordnet ist.

5. Kältegerät nach einem der Ansprüche 1, 3 od. 4, **dadurch gekennzeichnet, dass** die Verwaltungseinheit (10) eingerichtet ist, von einem entfernten Endgerät (4) Lieferbedingungen, insbesondere Mindestbestellmengen und Zustellungskosten, abzufragen und eine Menge von als fehlend festgestellten Artikeln auf eine oder mehrere an verschiedene Endgeräte (4) zu übertragende Bedarfslisten unter Minimierung der für die Artikel resultierenden Gesamtkaufsumme zu verteilen.

6. Kältegerät nach einem der vorhergehenden Ansprüche, **dadurch gekennzeichnet, dass** die Verwaltungseinheit (10) eingerichtet ist, Verfalls- und/oder Einlagerungsdaten von Artikeln im Vorratsbestand zu erfassen und Bezeichnungen von im Ist-Vorratsbestand vorhandenen Artikeln in Abhängigkeit vom Verhältnis des Verfalls- und/oder des Einlagerungsdatums zum aktuellen Datum zur Bedarfsliste hinzuzufügen.

7. Kältegerät nach einem der vorhergehenden Ansprüche, **dadurch gekennzeichnet, dass** die Verwaltungseinheit (10) eingerichtet ist, den Ist-Vorratsbestand auf Anforderung an ein entferntes Endgerät (3) zu übertragen.

8. Kältegerät nach Anspruch 7, **dadurch gekennzeichnet, dass** die Verwaltungseinheit (10) eingerichtet ist, über das entfernte Endgerät (3) bezeichnete Artikel zur Menge der als fehlend festgestellten Artikel hinzuzufügen und/oder daraus zu entfernen.

9. Kältegerät nach einem der vorhergehenden Ansprüche, **dadurch gekennzeichnet, dass** die Verwaltungseinheit (10) eingerichtet ist, eine Bestellung von als fehlend festgestellten Artikeln zu einem von einem Benutzer definierten Zeitpunkt zu übertragen.

10. Kältegerät nach einem der vorhergehenden Ansprüche, **dadurch gekennzeichnet, dass** an der Verwaltungseinheit (10) eine sogenannte Interesseliste mit Artikelbezeichnungen jeweils in Verbindung mit einem Preis gespeichert ist, und dass die Verwaltungseinheit (10) eingerichtet ist, aktuelle Preise zu den Artikeln der Interesseliste von den entfernten Endgeräten (4) anzufordern und, wenn der von einem Endgerät übertragene Preis eines Artikels unter dem der Interesseliste liegt, den Artikel in die Bedarfsliste aufzunehmen.

11. Kältegerät nach Anspruch 10, **dadurch gekennzeichnet, dass** die Verwaltungseinheit (10) eingerichtet ist, vor der Aufnahme des Artikels in die Bedarfsliste eine Genehmigung des Benutzers anzufordern.

12. Kältegerät nach einem der vorhergehenden Ansprüche, **dadurch gekennzeichnet, dass** die Verwaltungseinheit (10) mit einem Lesegerät (6) zum Erfassen einer an einem einzulagernden Artikel angebrachten Kennzeichnung verbunden ist.

13. Kältegerät nach einem der vorhergehenden Ansprüche, **dadurch gekennzeichnet, dass** die Verwaltungseinheit (10) mit einer Spracherkennungseinrichtung (7) zum Erfassen einer von einem Benutzer gesprochenen Bezeichnung eines einzulagernden Artikels verbunden ist.

14. Kältegerät nach einem der vorhergehenden Ansprüche, **dadurch gekennzeichnet, dass** die Verwaltungseinheit (10) mit einer Wägeeinrichtung (9) verbunden ist.

## Claims

1. Refrigerating appliance (1) with a management unit (10) for monitoring the stored stock in the refrigerating appliance (1), which is equipped with an interface (13) to a data transmission network (2), wherein the management unit (10) is arranged to compare an actual stored stock detected in the refrigerating appliance (1) with a target stored stock and for the case that the actual stored stock remains behind the target stored stock to create a transmission connection by way of the interface (13) with a remote terminal and to transmit a list, which is termed needs list, of designations of articles which are detected to be absent in the actual stored stock, to the remote terminal (4), **characterised in that** the management unit (10) is arranged to interrogate, with respect to an article detected as absent, prices from a plurality of remote terminals (4).

2. Refrigerating appliance according to claim 1, **characterised in that** the management unit (10) has a list of addresses of remote terminals (4) which are in a position of processing the needs list.

3. Refrigerating appliance according to one of the preceding claims, **characterised in that** the management unit (10) is arranged to store, with respect to an article, at least one price linked with an associated terminal address.

4. Refrigerating appliance according to claim 1 or 3, **characterised in that** the management unit (10) is arranged to transmit an order for an article, which is detected as being absent, to that remote terminal (4) with which the lowest price of the article is associated.

5. Refrigerating appliance according to one of claims 1, 3 and 4, **characterised in that** the management unit (10) is arranged to interrogate delivery conditions, particularly minimum order quantities and supply costs, from a remote terminal (4) and to distribute a quantity of articles, which are detected as being absent, on one or more needs lists, which are to be transmitted to different terminals (4), with minimisation of the total purchase sum resulting for the articles.

6. Refrigerating appliance according to one of the preceding claims, **characterised in that** the management unit (10) is arranged to detect use-by and/or storage dates of articles in the stored stock and to add designations of articles, which are present in the actual stored stock, to the needs list depending on the relationship of the use-by and/or storage date to the current date.

7. Refrigerating appliance according to one of the preceding claims, **characterised in that** the management unit (10) is arranged to transmit the actual stored stock on demand to a remote terminal (3).

8. Refrigerating appliance according to claim 7, **characterised in that** the management unit (10) is arranged to add articles, which are denoted by the remote terminal (3), to, or remote those articles from, the quantity of articles detected as being absent.

9. Refrigerating appliance according to one of the preceding claims, **characterised in that** the management unit (10) is arranged to transmit an order for articles, which are detected as being absent, at a point in time defined by a user.

10. Refrigerating appliance according to one of the preceding claims, **characterised in that** a so-called interest list with article designations each connected with a respective price is stored at the management unit (10) and that the management unit (10) is arranged to request current prices with respect to the articles of the interest list from the remote terminals (4) and when the price of an article transmitted by a terminal lies below that of the interest list to take the article into the needs list.

11. Refrigerating appliance according to claim 10, **characterised in that** the management unit (10) is arranged to request agreement of the user before taking the article into the needs list.

12. Refrigerating appliance according to one of the preceding claims, **characterised in that** the management unit (10) is connected with a reader (6) for detecting an identification applied to an article to be stored.

13. Refrigerating appliance according to one of the preceding claims, **characterised in that** the management unit (10) is connected with a speech recognition device (7) for detecting a designation, which is spoken by a user, of an article to be stored.

14. Refrigerating appliance according to one of the preceding claims, **characterised in that** the management unit (10) is connected with a weighing device (9).

## Revendications

1. Appareil frigorifique (1) doté d'une unité de gestion (10) qui surveille l'état des réserves dans l'appareil frigorifique (1), qui est équipé d'une interface (13) avec un réseau (2) de transmission de données, l'unité de gestion (10) étant conçue pour comparer un état effectif des réserves dans l'appareil frigorifique (1) à un état de consigne des réserves et au cas où l'état effectif des réserves n'atteint plus l'état de consigne des réserves, pour établir par l'intermédiaire de l'interface (13) une liaison de transmission avec un terminal à distance (4) et de transmettre au terminal à distance (4) une liste, appelée liste des besoins, qui contient la désignation des articles dont l'absence a été constatée dans l'état effectif des réserves,
**caractérisé en ce que** l'unité de gestion (10) est conçue pour demander à plusieurs terminaux à distance (4) le prix d'un article dont l'absence a été constatée.

2. Appareil frigorifique selon la revendication 1, **caractérisé en ce que** l'unité de gestion (10) dispose d'une liste d'adresses de terminaux à distance (4) qui sont en mesure de traiter la liste des besoins.

3. Appareil frigorifique selon l'une des revendications précédentes, **caractérisé en ce que** l'unité de gestion (10) est conçue pour conserver en mémoire pour chaque article un prix associé à l'adresse du terminal concerné.

4. Appareil frigorifique selon les revendications 1 ou 3, **caractérisé en ce que** l'unité de gestion (10) est conçue pour transmettre une commande d'un article dont l'absence a été constatée au terminal à distance (4) auquel est associé le prix le plus bas pour l'article.

5. Appareil frigorifique selon l'une des revendications 1, 3 ou 4, **caractérisé en ce que** l'unité de gestion (10) est conçue pour consulter sur un terminal à distance (4) les conditions de livraison, en particulier les quantités minimales de commande et le coût de la livraison, et de répartir un ensemble d'articles dont l'absence a été constatée entre une ou plusieurs listes de besoins à transmettre à différents terminaux (4), de manière à minimiser le montant total de l'achat de ces articles.

6. Appareil frigorifique selon l'une des revendications précédentes, **caractérisé en ce que** l'unité de gestion (10) est conçue pour saisir les dates de péremption et/ou de placement des articles dans l'état des réserves et d'ajouter dans la liste des besoins la désignation des articles présents dans l'état effectif des réserves en fonction du rapport entre la date de péremption et/ou la date de placement et la date actuelle.

7. Appareil frigorifique selon l'une des revendications précédentes, **caractérisé en ce que** l'unité de gestion (10) est conçue pour transmettre sur demande l'état effectif des réserves à un terminal à distance (3).

8. Appareil frigorifique selon la revendication 7, **caractérisé en ce que** l'unité de gestion (10) est conçue pour ajouter et/ou enlever de l'ensemble des articles dont l'absence a été constatée des articles désignés par l'intermédiaire du terminal à distance (3).

9. Appareil frigorifique selon l'une des revendications précédentes, **caractérisé en ce que** l'unité de gestion (10) est conçue pour transmettre à un instant défini par l'utilisateur une commande d'articles dont l'absence a été constatée.

10. Appareil frigorifique selon l'une des revendications précédentes, **caractérisé en ce qu'**une liste dite de commandes possibles, qui présente des désignations d'articles chaque fois associées à un prix, est conservée en mémoire dans l'unité de gestion (10), et **en ce que** l'unité de gestion (10) est conçue pour demander aux terminaux à distance (4) le prix actuel des articles repris dans la liste des commandes possibles et à reprendre un article dans la liste des besoins lorsque le prix de l'article transmis par un terminal est inférieur au prix de l'article dans la liste des commandes possibles.

11. Appareil frigorifique selon la revendication 10, **caractérisé en ce que** l'unité de gestion (10) est conçue pour demander une autorisation de l'utilisateur avant de reprendre un article dans la liste des besoins.

12. Appareil frigorifique selon l'une des revendications précédentes, **caractérisé en ce que** l'unité de gestion (10) est reliée à un appareil de lecture (6) pour saisir un repère d'identification placé sur un article à placer dans la réserve.

13. Appareil frigorifique selon l'une des revendications précédentes, **caractérisé en ce que** l'unité de gestion (10) est reliée à un dispositif (7) de reconnaissance vocale pour saisir la désignation d'un article à mettre en réserve prononcée par l'utilisateur.

14. Appareil frigorifique selon l'une des revendications précédentes, **caractérisé en ce que** l'unité de gestion (10) est reliée à un dispositif de pesage (9).
